# EUROPÄISCHE PATENTSCHRIFT

(11) **EP 3 378 299 B1**
(45) Veröffentlichungstag und Bekanntmachung des Hinweises auf die Patenterteilung: **13.05.2020**
(21) Anmeldenummer: 18401027.0
(22) Anmeldetag: 12.03.2018
(51) Int. Cl.: A01B 69/00, A01B 79/00, A01D 41/127

(54) **LANDWIRTSCHAFTLICHES TERMINAL**
AGRICULTURAL TERMINAL
TERMINAL AGRICOLE

(30) Priorität: 15.03.2017 DE 102017105490
(43) Veröffentlichungstag der Anmeldung: 26.09.2018
(73) Patentinhaber: Amazonen-Werke H. Dreyer GmbH & Co. KG, 49205 Hasbergen (DE)
(72) Erfinder: Sia, Tim-Randy, 49179 Ostercappeln (DE); Kühn, Christoph, 49080 Osnabrück (DE); Konermann, Thomas, 49479 Ibbenbüren (DE); Käller, Michael, 49324 Melle (DE)

(56) Entgegenhaltungen:
- EP-A1- 2 583 544
- JP-A- 2016 093 126
- US-A- 5 751 576
- US-A1- 2012 256 843

## Beschreibung

Die Erfindung betrifft ein Terminal zur Steuerung einer landtechnischen Maschine gemäß dem Oberbegriff des Patentanspruches 1.

Die zunehmende Komplexität landtechnischer Maschinen bedingt eine immer größere Detailtiefe von Einstellparametern dieser Maschinen. Um eine Bearbeitung mit der jeweiligen Maschine durchzuführen, muss also eine zunehmend große Anzahl von Parametern für die jeweils verwendete Maschine einstellbar sein und eine entsprechende Fülle von Informationen anzeigbar sein. Für derartige Zwecke hat sich die Verwendung von sogenannten Terminals für die Steuerung von landtechnischen Maschinen durchgesetzt. Diese Terminals ermöglichen es dem Benutzer die gewünschten Parameter der landtechnischen Maschine einzustellen und die jeweils gewünschten Informationen anzuzeigen.

Derartige Terminals sind typischerweise in der Kabine eines Schleppers, an den die landtechnische Maschine angekoppelt ist, oder einer selbstfahrenden landtechnischen Maschine angeordnet. Aufgrund der Vielzahl von Bedienelementen in der Kabine des Schleppers ist der verfügbare Platz oft stark limitiert, so dass die Größe derartiger Terminals begrenzt ist. Aus diesem Grund verfügen landwirtschaftliche Terminals oftmals über berührungsempfindliche Bildschirme mit integrierten Bedienelementen, so dass die verfügbare Anzeigefläche maximiert werden kann. Teilweise werden in den Terminals auch berührungsempfindliche Bildschirme mit physikalischen Knöpfen und Tastern kombiniert, welche den Vorteil einer haptischen Rückmeldung eines Schaltereignisses bieten.

Ein derartiges Terminal wird beispielsweise durch die US2012/0256843A1 offenbart. Dieses Terminal zeigt einen berührungsempfindlichen Bildschirm und verschiedene Bedienelemente. Die Menüoberfläche des Terminal ermöglicht die Einstellung verschiedenster Parameter und die Anzeige von weitreichenden Informationen des Arbeitsprozesses. So können beispielsweise Maschinenparameter angezeigt und ausgelesen werden. Auch ist vorgesehen die Maschine auf der bearbeiteten Fläche in einer Kartenansicht darzustellen. Ebenso können mittels des Terminals Kurzwahltasten eines mit dem Terminal verbundenen Handgriffs mit Funktionen belegt werden. In Vorbereitung des eigentlichen Bearbeitungsvorganges können somit mittels verschiedener Menüs das Terminal selbst, Peripheriegeräte und die zu steuernden Maschinen mittels des Terminals eingestellt und eingerichtet werden.

Während des Bearbeitungsvorganges mit der landtechnischen Maschine auf der landwirtschaftlichen Fläche wird oftmals die Kartenansicht verwendet, um den Bearbeitungsvorgang zu überwachen. Die Kartenansicht ermöglicht es in der Regel die aktuelle Position auf der landwirtschaftlichen Fläche, die bereits bearbeitete und die noch unbearbeitete Fläche sowie die Feldgrenze anzuzeigen. Zudem ist oftmals eine Unterscheidung zwischen aktivierten und nichtaktivierten Teilbreiten der landtechnischen Maschine und eine Anzeige deren Position möglich. Wichtige Statusinformationen, wie die Größe der bereits bearbeiteten Fläche, der Restinhalt eines Vorratstanks oder die aktuelle Geschwindigkeit lassen sich oftmals zusätzlich anzeigen. Die angezeigten Informationen sind hierbei festgelegt. Nachteilig an bekannten Terminals ist somit, dass die in der Kartenansicht darzustellenden Informationen nicht oder nur sehr umständlich konfiguriert werden können.

Andere Einrichtungen zum Darstellen von Informationen während der Bearbeitung einer landwirtschaftlichen Fläche sind beispielsweise aus den Druckschriften US 5 751 576 A, EP 2 583 544 A1 und JP 2016 093126 A bekannt.

Aufgabe der vorliegenden Erfindung ist es, ein landwirtschaftliches Terminal anzugeben, welches eine flexiblere Möglichkeit der Anzeige von Informationen bereitstellt.

Diese Aufgabe wird durch den kennzeichnenden Teil des Anspruchs 1 gelöst. Das erfindungsgemäße Terminal ist dazu eingerichtet, Informationen über den Bearbeitungsvorgang des landwirtschaftlichen Maschinensystems zu ermitteln und diese in einem Bereich des Bildschirms, insbesondere im Bereich der Kartenansicht darzustellen, wobei die Auswahl und Anordnung der Informationen auf dem Bildschirm in einem Konfigurationsmenü des Terminals konfigurierbar ist. Erfindungsgemäß ist also vorgesehen, dass die dargestellten Informationen durch den Benutzer konfiguriert werden können, da sich diesbezüglich die Wünsche des jeweiligen Benutzers stark unterscheiden können. Die darzustellenden Informationen können auch von der jeweils verwendeten landtechnischen Maschine abhängen. So ist es beispielsweise unnötig für die Bearbeitung mit einem Pflug die Angabe eines Behälterinhaltes einer Verteilmaschine vorzusehen, da ein Pflug einen solchen Behälter nicht besitzt. Daher ist es von großem Vorteil eine Anzeige bereitzustellen, die mittels einer Konfigurationsmenüs die Möglichkeit für den Benutzer bietet, die Anzeige der Informationen auf den jeweiligen Benutzer und/oder den jeweiligen Bearbeitungsvorgang abzustimmen.

Erfindungsgemäß kann mittels einer Bewegungsgeste und/oder Berührungsgeste auf dem berührungsempfindlichen Bildschirm in dem Konfigurationsmenü die anzuzeigende Information ausgewählt und in einen gewünschten Bereich des Bildschirms bewegt werden, in dem die Information angezeigt werden soll. Auf diese Weise können die anzuzeigenden Informationen sehr intuitiv in den Bereich bewegt bzw. gezogen werden, in dem sie auf dem Bildschirm angezeigt werden sollen, so dass die Konfiguration der Anzeige der Informationen sehr zeitsparend und effektiv möglich ist.

In einer vorteilhaften Ausgestaltung sind für die Darstellung ein oder mehrere der folgenden Informationen zumindest auswählbar und werden von der landtechnischen Maschine bereitgestellt:
- Geschwindigkeit des landwirtschaftlichen Maschinensystems,
- gesamte zu bearbeitende Fläche
- bereits bearbeitete Fläche
- noch zu bearbeitende Fläche
- Inhalt eines Vorratstanks
- Einstellparameter des landwirtschaftlichen Maschinensystems, wie eingestellte Arbeitsbreite, aktivierte oder deaktivierte Teilbreiten, Arbeitstiefe, Ausbringmenge
- Statusinformationen der landtechnischen Maschine.

Derartige Informationen sind für den Benutzer besonders informativ und nützlich bei der Durchführung des Bearbeitungsvorganges. So kann in Kenntnis der derzeitigen Geschwindigkeit die Funktionstüchtigkeit der landtechnischen Maschine überwacht werden. Viele Maschinen funktionieren nur in einem bestimmten Geschwindigkeitsbereich zufriedenstellend oder können bei zu hohen Geschwindigkeiten beschädigt werden. So lässt beispielsweise die Ablagegenauigkeit von Einzelkornsämaschinen mit zunehmender Geschwindigkeit stark nach, so dass diese je nach Typ ab Geschwindigkeiten von 10-20 km/h nicht mehr korrekt funktionieren. Aus der Angabe der noch zu bearbeitenden Fläche und der bereits bearbeiteten Fläche in Kombination mit der Information über den Inhalt eines Vorratstanks kann beispielsweise, abgeschätzt werden, ob die noch in dem Tank befindliche Menge an Gut für die zu bearbeitende Restfläche ausreichend ist. Auf diese Weise führt die Angabe von verschiedenen Informationen, je nach verwendeter landtechnischer Maschine zu einer Erhöhung der Produktivität und ggf. sogar zu einer Verhinderung von Beschädigungen an der jeweiligen landtechnischen Maschine. Als Statusinformation der landtechnischen Maschine können beispielsweise Symbole dienen, die beispielsweise die derzeitige Neigung eines Spritzgestänges oder den Lenkwinkel einer Achsschenkellenkung anzeigen.

Es kann vorgesehen sein, dass das Terminal die darstellbaren Informationen in Abhängigkeit einer von dem Terminal automatisch erkannten oder durch den Benutzer in das Terminal eingegebenen landtechnischen Maschine auswählt. Es können durch den Benutzer also nur diejenigen Informationen zur Anzeige gebracht werden, die durch die aktuell verwendete landtechnische Maschine auch bereitgestellt werden. Die jeweils verwendete landtechnische Maschine kann beispielsweise durch eine Datenverbindung, insbesondere eine Isobus-Verbindung zwischen dem Terminal und der landtechnischen Maschine ermittelt werden.

In einer möglichen Ausgestaltung der Erfindung erfolgt die Darstellung der Informationen durch das Terminal zumindest im Bereich der Kartenansicht halbtransparent, so dass sowohl die Informationen, als auch der dahinterliegende Kartenbereich sichtbar sind. Auf diese Weise kann der Bildschirmbereich optimal genutzt werden, da die anzuzeigende Information immer im Vordergrund ablesbar ist, die dahinterliegende Karte jedoch ebenso erkannt werden kann.

Es kann vorgesehen sein, dass in den dargestellten Informationen durch eine Wischgeste auf dem berührungsempfindlichen Bildschirm des Terminals geblättert werden kann, so dass wahlweise eine von mehreren Anordnungen mit jeweils verschiedenen Informationen in dem Bereich dargestellt wird. Auf diese Weise kann eine Vielzahl von Informationen sehr schnell und effektiv zugänglich gemacht werden. Eine Wischgeste ermöglicht es dem Benutzer von einer ersten Anordnung von Informationen in eine zweite Anordnung oder weitere Anordnungen zu wechseln und so in der jeweiligen Situation die benötigten Informationen schnell angezeigt zu bekommen. Auch ist es denkbar die verschiedenen Anordnungen für verschiedene Benutzer und/oder landtechnische Maschinen zu konfigurieren, so dass für den jeweiligen Benutzer oder die jeweils verwendete landtechnische Maschine mittels der Wischgeste lediglich die gewünschte Anordnung von Informationen ausgewählt werden muss, was eine sehr effektive Art der Terminalbenutzung und Anzeige von Informationen darstellt, da nicht jeweils erneut die Informationsanzeige neu konfiguriert werden muss.

Weitere vorteilhafte Ausgestaltungen ergeben sich aus der Beispielsbeschreibung. Hierbei zeigen
- Fig. 1: eine erfindungsgemäße Darstellung von Informationen in der Kartenansicht eines erfindungsgemäßen Terminals und
- Fig. 2: ein Konfigurationsmenü eines erfindungsgemäßen Terminals.

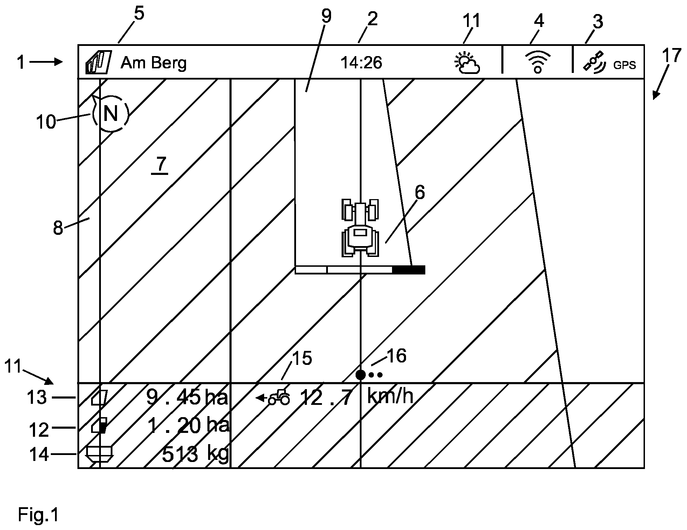

Eine erfindungsgemäße Darstellung von Informationen ist in Fig. 1 gezeigt. Dargestellt ist die Bildschirmansicht eines erfindungsgemäßen Terminals. Dieses zeigt im oberen Bereich 1 mehrere Symbole zur Anzeige verschiedener Informationen in einer Statusleiste. Diese kann beispielsweise die Angabe einer Uhrzeit 2, der Qualität eines GPS-Signals 3, die Qualität einer drahtlosen Datenverbindung 4, die derzeitige Position auf einer bekannten landwirtschaftlichen Fläche 5 oder Angaben zur aktuellen Wetterlage 11 umfassen.

Zudem ist eine landtechnische Maschine 6 gezeigt, die eine landwirtschaftliche Fläche 7 bearbeitet, wobei die bearbeitete Fläche 8 farblich oder mittels eines Schraffur abweichend von der unbearbeiteten Fläche 9 dargestellt sein kann. Verschiedene Informationen können im Bereich der landwirtschaftlichen Fläche dargestellt werden, wie die aktuelle Lage der Himmelsrichtung Norden relativ zur landtechnischen Maschine 10. Zudem ist im unteren Bereich 11 der Kartenansicht eine erfindungsgemäße Miniaturansicht vorhanden, welche Auskunft gibt über die bearbeitete Fläche 12, die Gesamtfläche 13, die Restmenge 14 an landwirtschaftlichem Gut in einem Behälter und die aktuelle Geschwindigkeit 15 der landtechnischen Maschine. Die Darstellung weiterer Informationen ist denkbar. Die Punkte 16 zeigen an, dass weitere Informationen in der Miniaturansicht dargestellt werden können, welche durch eine berührende, horizontale Wischgeste auf dem Bildschirm des Terminals jeweils wahlweise angezeigt oder ausgeblendet werden können. Es kann hiermit durch mehrere Anordnungen von Informationen geblättert werden. Es kann vorgesehen sein, auf der rechten Seite 17 verschiedene virtuelle Bedienelemente beispielsweise durch eine nicht dargestellte physikalische Taste am Gehäuse des Terminals, einzublenden. Die Miniaturansicht 11 besitzt eine durch eine Schraffur angedeutete Transparenz, so dass der dahinterliegende Teil der Kartenansicht ebenfalls erkannt werden kann.

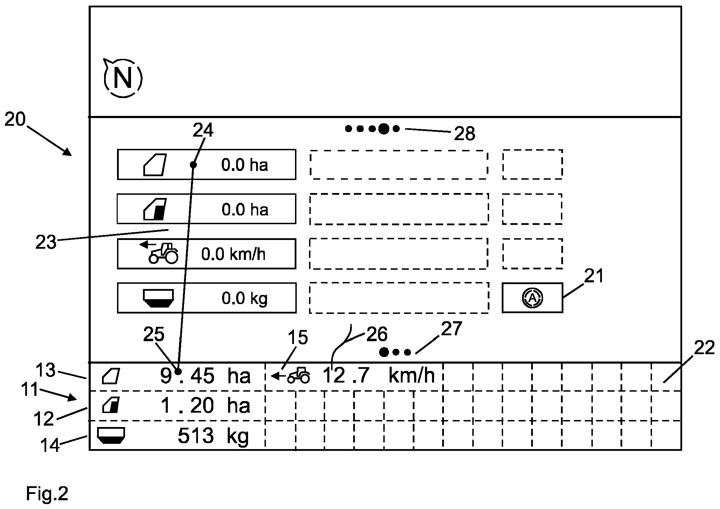

Erfindungsgemäß ist ein Konfigurationsmenü vorgesehen, wie beispielsweise in Fig. 2 dargestellt. Das Konfigurationsmenü dient dazu, die Informationen nach dem Wunsch des Benutzers im Bereich 11 anzuordnen, so dass diese dann in der Kartenansicht der Fig. 1 so zur Anzeige gebracht werden. Der Wechsel aus der Kartenansicht oder aus einer anderen Oberfläche des Terminals in das Konfigurationsmenü kann mittels eines in Fig. 1 nicht dargestellten virtuellen Bedienelementes oder mittels eines physikalischen Bedienelementes am Terminal erfolgen.

Das Konfigurationsmenü in Fig. 2 zeigt im unteren Bereich 11 entsprechend der Fig. 1 die Anordnung von verschiedenen Informationen. Hierzu gehören, die bearbeitete Fläche 12, die Gesamtfläche 13, die Restmenge an landwirtschaftlichem Gut in einem Behälter 14 und die aktuelle Geschwindigkeit der landtechnischen Maschine 15. Im Bereich 20 sind die zur Darstellung verfügbaren Informationen abgebildet. Hierbei kann es sich um die Angabe von Zahlenwerten handeln, wie momentane Messwerte, beispielsweise die Geschwindigkeit, oder um die Angabe von eingestellten Parametern, beispielsweise eine auszubringende Sollmenge an Gut. Auch kann vorgesehen sein Statusinformationen, wie beispielsweise einen aktivierten oder deaktivierten Automatikmodus in Form eines Symbols 21 in dem Bereich 11 darzustellen.

Der Bereich 11 ist durch vertikale und horizontale Linien 22 in Unterbereiche unterteilt, welche ein Raster für die Anordnung der darzustellenden Informationen bilden. Die Anordnung der darzustellenden Informationen kann also gemäß des Rasters in festgelegten Abständen bzw. an festgelegten Positionen erfolgen.

Die Konfiguration des Bereichs 11 durch den Benutzer erfolgt durch Interaktion mit dem Terminal mittels des berührungsempfindlichen Bildschirms. Beispielsweise kann vorgesehen sein, die anzuzeigende Information im Bereich 20 zu berühren und anschließend die Position in dem Bereich 11 zu berühren, an dem die entsprechende Information angezeigt werden soll, woraufhin die entsprechende Information an der markierten Position angezeigt wird. Alternativ kann vorgesehen sein, die gewünschte Information, in diesem Fall die zu bearbeitende Fläche, durch permanente Berührung des Bildschirmes entlang eines Pfades 23 mit Startpunkt 24 und Endpunkt 25 aus dem Bereich 20 in den Bereich 11 an den Ort zu bewegen, an dem die Information angezeigt werden soll. Entsprechend kann vorgesehen sein, Informationen aus dem Bereich 11 zu entfernen, indem die nicht mehr darzustellende Information, in diesem Fall die Geschwindigkeit, durch Berühren entlang eines Pfades 26 aus dem Bereich 11 herausbewegt wird.

Die Punkte 27 zeigen an, dass mehrere, in diesem Fall drei, Seiten von Informationen entsprechend der in Fig. 1 gezeigten Punkte 17 konfigurierbar sind. Die jeweils derzeit zu konfigurierende Seite wird durch einen vergrößerten Punkt angezeigt. Die Auswahl der zu konfigurierenden Seiten erfolgt durch eine berührende seitwärts gerichtete Wischgeste auf dem Bildschirm des Terminals. Es kann auch, je nach Erfordernis, auf mehreren Seiten zumindest teilweise dieselbe Information anzeigbar sein. So kann die Anzeige von Informationen im Bereich 11 beispielsweise derart konfiguriert sein, dass auf jeder der in diesem Beispiel drei darstellbaren Seiten mit Informationen die derzeitige Geschwindigkeit angezeigt wird.

Die Punkte 28 zeigen an, dass fünf Seiten mit im Bereich 11 darstellbaren Informationen zur Auswahl stehen. Innerhalb dieser Seiten kann mit einer seitwärts gerichteten Wischgeste geblättert werden und jeweils die Informationen mittels einer entsprechenden Berührung ausgewählt und in den Bereich 11 bewegt werden, die in der Kartenansicht der Fig. 1 bei der Bearbeitung der landwirtschaftlichen Fläche angezeigt werden sollen.

Es kann vorgesehen sein im Hintergrund der Konfigurationsmenüs die Kartenansicht einzublenden, was in Fig. 2 durch die Darstellung des Kompass im oberen linken Bereich entsprechend der Fig. 1 angedeutet ist.

## Patentansprüche

1. Terminal zur Steuerung einer landtechnischen Maschine, wobei das Terminal über einen berührungsempfindlichen Bildschirm verfügt, wobei das Terminal mit einem Positionserfassungssystem verbunden und ausgebildet ist, die aktuelle Position der landtechnischen Maschine in einer Kartenansicht auf einer landwirtschaftlichen Fläche anzuzeigen, wobei das Terminal dazu eingerichtet ist, Informationen (12, 13, 14, 15) über den Bearbeitungsvorgang der landtechnischen Maschine zu ermitteln und in einem Bereich (11) des Bildschirms, insbesondere in einem Bereich der Kartenansicht, darzustellen,
**dadurch gekennzeichnet, dass** die Auswahl und Anordnung der Informationen auf dem Bildschirm in einem Konfigurationsmenü des Terminals konfigurierbar ist und mittels einer Bewegungsgeste und/oder Berührungsgeste (23, 26) auf dem berührungsempfindlichen Bildschirm in dem Konfigurationsmenü die anzuzeigende Information ausgewählt und in einen gewünschten Bereich (11) des Bildschirms bewegt werden kann, in dem die Information angezeigt werden soll.

2. Terminal nach Anspruch 1,
**dadurch gekennzeichnet, dass** für die Darstellung ein oder mehrere der folgenden Informationen zumindest auswählbar sind und von der landtechnischen Maschine bereitgestellt werden:
- Geschwindigkeit der landtechnischen Maschine (15),
- gesamte zu bearbeitende Fläche (13)
- bereits bearbeitete Fläche (12)
- noch zu bearbeitende Fläche
- Inhalt eines Vorratstanks (14)
- Einstellparameter der landtechnischen Maschine, wie eingestellte Arbeitsbreite, aktivierte oder deaktivierte Teilbreiten, Arbeitstiefe, Ausbringmenge.

3. Terminal nach zumindest einem der vorhergehenden Ansprüche,
**dadurch gekennzeichnet, dass** die Darstellung der Informationen durch das Terminal zumindest im Bereich (11) der Kartenansicht halbtransparent erfolgt, so dass sowohl die Informationen (12, 13, 14, 15), als auch der dahinterliegende Kartenbereich sichtbar sind.

4. Terminal nach zumindest einem der vorhergehenden Ansprüche,
**dadurch gekennzeichnet, dass** in den dargestellten Informationen (12, 13, 14, 15) durch eine Wischgeste auf dem berührungsempfindlichen Bildschirm des Terminals geblättert werden kann, so dass wahlweise eine von mehreren Anordnungen mit jeweils verschiedenen Informationen (12, 13, 14, 15) in dem Bereich dargestellt wird.

## Claims

1. Terminal for controlling a agricultural machine, wherein the terminal has a touch-sensitive screen, wherein the terminal is connected to a position sensing system and is configured to display the current position of the agricultural machine in a map view on an agricultural area, wherein the terminal is designed to determine information (12, 13, 14, 15) about the cultivation process of the agricultural machine and to represent it in a region (11) of the screen, in particular in a region of the map view,
**characterized in that** the selection and arrangement of the information on the screen are configurable in a configuration menu of the terminal and by means of a movement gesture and/or touch gesture (23, 26) on the touch-sensitive screen in the configuration menu the information to be displayed can be selected and moved into a desired region (11) of the screen, in which the information is intended to be displayed.

2. Terminal according to Claim 1,
**characterized in that** for the representation one or more of the following items of information are at least selectable and are provided by the agricultural machine:
- speed of the agricultural machine (15),
- total area (13) to be cultivated
- area (12) already cultivated
- area still to be cultivated
- content of a storage tank (14)
- setting parameters of the agricultural machine, such as set working width, activated or deactivated partial widths, working depth, application rate.

3. Terminal according to at least one of the preceding claims,
**characterized in that** the information is represented in semitransparent fashion by the terminal at least in the region (11) of the map view, such that both the information (12, 13, 14, 15) and the map region behind the latter are visible.

4. Terminal according to at least one of the preceding claims,
**characterized in that** it is possible to scroll in the represented information (12, 13, 14, 15) by means of a swipe gesture on the touch-sensitive screen of the terminal, such that optionally one of a plurality of arrangements each having different items of information (12, 13, 14, 15) is represented in the region.

## Revendications

1. Terminal permettant de commander une machine agricole, le terminal disposant d'un écran tactile, le terminal étant relié à un système de détection de position et réalisé pour afficher dans une vue cartographique la position actuelle de la machine agricole sur un terrain agricole, le terminal étant aménagé pour déterminer des informations (12, 13, 14, 15) concernant l'opération de traitement de la machine agricole et pour les représenter dans une zone (11) de l'écran, en particulier dans une zone de la vue cartographique,
**caractérisé en ce que** la sélection et la disposition des informations à l'écran sont configurables dans un menu de configuration du terminal, et au moyen d'un geste de mouvement et/ou d'un geste de contact (23, 26) sur l'écran tactile, l'information à afficher peut être sélectionnée dans le menu de configuration et déplacée dans une zone souhaitée (11) de l'écran où l'information doit être affichée.

2. Terminal selon la revendication 1, **caractérisé en ce que** pour la représentation, au moins une ou plusieurs des informations suivantes peut/peuvent être sélectionnée(s) et fournie(s) par la machine agricole :
- la vitesse de la machine agricole (15),
- la surface totale à traiter (13),
- la surface déjà traitée (12),
- la surface restant à traiter,
- le contenu d'un réservoir de stockage (14),
- des paramètres de réglage de la machine agricole, tels que la largeur de travail réglée, des largeurs partielles activées ou désactivées, la profondeur de travail, la quantité de production.

3. Terminal selon au moins l'une des revendications précédentes, **caractérisé en ce que** la représentation des informations par le terminal est effectuée de manière semi-transparente au moins dans la zone (11) de la vue cartographique de sorte qu'à la fois les informations (12, 13, 14, 15) et la zone cartographique sous-jacente sont visibles.

4. Terminal selon au moins l'une des revendications précédentes, **caractérisé en ce qu'**il est possible de parcourir les informations représentées (12, 13, 14, 15) par un geste de balayage sur l'écran tactile du terminal de sorte qu'au choix l'une de plusieurs dispositions est représentée dans la zone avec des informations (12, 13, 14, 15) respectivement différentes.
